# EUROPÄISCHE PATENTSCHRIFT

(11) **EP 0 527 177 B1**
(45) Veröffentlichungstag und Bekanntmachung des Hinweises auf die Patenterteilung: **13.04.1994**
(21) Anmeldenummer: 91908680.1
(22) Anmeldetag: 18.04.1991
(51) Int. Cl.: F17D 3/08

(54) **REINIGBARE MOLCHSTATION**
CLEANABLE SCRAPER STATION
STATION D'ECOUVILLONNAGE NETTOYABLE

(30) Priorität: 30.04.1990 DE 9004899 U
(43) Veröffentlichungstag der Anmeldung: 17.02.1993
(73) Patentinhaber: OTTO TUCHENHAGEN GmbH & Co. KG, 21514 Büchen (DE)
(72) Erfinder: HIELSCHER, Claus, D-3139 Langendorf (DE); GAHR, Günter, Erich, D-2059 Büchen (DE)
(74) Vertreter: DIEHL GLAESER HILTL & PARTNER
(86) Internationale Anmeldenummer: EP9100744
(87) Internationale Veröffentlichungsnummer: WO9117386

(56) Entgegenhaltungen:
- GB-A- 2 026 647
- GB-A- 2 102 095
- US-A- 3 779 270

## Beschreibung

Die Erfindung betrifft eine reinigbare Molchstation, die als Sende- bzw. Empfangsstation ausgebildet ist und in der ein Molch einen molchbaren Produktleitungsabschnitt einseitig begrenzt, an die eine Druckmittelquelle zur gesteuerten Uberführung des Molches von der Sende- zur Empfangsstation angeschlossen ist, aus der im Zuge der Rückführung des Molches von der Empfangs- zur Sendestation das aus dem Produktleitungsabschnitt verdrängte Druckmittel abgeführt wird, mit Kontrolleinrichtungen zum Feststellen der Position des Molches, mit gegenüber dem molchbaren Abschnitt erweitertem Querschnitt und mit einem beweglichen Anschlag fur den Molch.

Eine Molchstation der einleitend gekennzeichneten Gattung ist im wesentlichen aus der GB 21 02 095 A bekannt. Es handelt sich hierbei um eine Vorrichtung für das Senden und Empfangen von im allgemeinen kugelförmigen Molchen innerhalb eines Rohrleitungssystems. Die Molchstation besteht aus einem verlängerten Fangkorb, der an einem Ende an eine Rohrleitung angeschlossen werden kann und der für die Aufnahme von mehreren Molchen geeignet ist. die von dem einem Ende in die Rohrleitung gesendet werden, und einer Abschußvorrichtung, die jeweils einen Molch in die Rohrleitung senden kann. Ein weiterer Bestandteil der Molchsendevorrichtung ist ein verlängerter Molchaufnahmebehälter, der mehrere Molche aufnehmen kann, der demontierbar ist und der teleskopartig in den Fangkorb eingesetzt werden kann. Der Molchaufnahmebehälter ist an einem Ende offen. Dieses Ende liegt nach dem Einsetzen in den Fangkorb seitlich am vorderen Ende des Fangkorbes. Die Abschußvorrichtung enthalt eine Arretiervorrichtung, die vom Aufnahmebehälter seitlich am vorderen Ende des Fangkorbes getragen wird und die sich zwischen zwei Positionen bewegt. Wird sie angehoben, wird der Molch blockiert, senkt sie sich, so kann der Molch passieren. Die Arretiervorrichtung wird von einem Teil bewegt, das vom Fangkorb getragen wird. Dieses Teil rastet beim Einsetzen des Aufnahmebehälters in den Fangkorb in die Arrentiervorrichtung ein. Die Bewegung erfolgt wahlweise zwischen der Molchblockier- und Molchdurchlaßposition. Eine zweite Molchblockiervorrichtung ist vorzugsweise mit einem Betriebsteil ausgerüstet, welches dazu dient, die im Aufnahmebehälter verbleibenden Molche zurückzuhalten, während der erste Molch das System durchläuft und den nächsten Molch nach Entsendung des ersten in Abschußstellung zu bringen. Zur Unterstützung des Sendevorganges wird dem System Flüssigkeit entzogen und über ein Rohrstück in den Farbkorb und von dort aus uber Öffnungen in den Molchaufnahmebehälter unmittelbar hinter den zu sendenden Molch geführt.

Obgleich der Fangkorb einen gegenüber der Rohrleitung erweiterten Querschnitt aufweist, so daß Flüssigkeit aus dem System an dem bereitgestellten Molchen vorbeigeführt werden kann, sind der vorgenannten Druckschrift keinerlei Hinweise oder Anregungen darüber zu entnehmen, wie die Molche an Ort und Stelle ggf. einer Reinigung unterzogen werden könnten. Für den Fall, daß die Molche gereinigt werden müssen, ist der Fangkorb in Verbindung mit dem Molchaufnahmebehälter zu demontieren, die Molche sind zu entnehmen und außerhalb zu reinigen.

Andere bekannte Molchstationen beinhalten ebenfalls solche Sendestationen, aus denen der Molch zum Zwecke seiner Reinigung ausgebaut werden muß. Alsdann kann der Molch manuell gereinigt und es können sowohl das Gehäuse der Sendestation als auch der zugeordnete Produktleitungsabschnitt einer Durchflußreinigung unterzogen werden.

Eine derartige Prozedur ist nicht nur umständlich und widerspricht dem allseits anerkannten Automatisierungsziel, sämtliche mit Produkt kontaminierten Anlagenteile CIP-reinigungsfähig (CIP: cleaning in place, was soviel bedeutet wie "Reinigung an Ort und Stelle") auszubilden, sie birgt auch eine erhebliche Unfallgefahr in sich, falls das den Molch beaufschlagenden Druckmittel, im Falle einer Demontage des Sendegehäuses , noch nicht hinreichend entspannt ist. Eine diesbezügliche unzureichende Entspannung des Druckmittels kann beispielsweise auftreten, wenn eine Fehlbedienung im Zusammenhang mit der Druckmittelzufuhr vorliegt oder wenn das im Zuge der Rückführung des Molches von der Empfangszur Sendestation aus dem Produktleitungsabschnitt verdrängte Druckmittel, infolge einer Fehlbedienung oder auch eines Defektes an beteiligten Bauteilen, nicht vollends abgeführt wurde.

Ausgehend von der vorstehend aufgezeigten Problematik liegt der Erfindung die Aufgabe zugrunde, eine reinigbare Molchstation der einleitend gekennzeichneten Gattung derart auszubilden, daß sie CIP-reinigungsfähig ist. Dies soll bedeuten, daß sowohl der Molch an Ort und Stelle als auch die ihn umschließende Sende- bzw. Empfangsstation ohne Ausbau des Molches im Durchfluß reinigbar sind. Darüber hinaus soll es möglich sein, beiderseits eines molchbaren Produktleitungsabschnittes Molchstationen anzuordnen, die gleichermaßen CIP-reinigungsfähig sind.

Die Lösung der gestellten Aufgabe wird durch Anwendung der Kennzeichenmerkmale des Anspruchs 1 erreicht. Vorteilhafte Weiterbildungen der reinigbaren Molchstation sind Gegenstand der Ansprüche 2 bis 6. In Anspruch 7 wird Schutz begehrt fur einen molchbaren Produktleitungsabschnitt, der wenigsten eine reinigbare Molchstation gemäß der Erfindung aufweist Die Ansprüche 8 bis 10 betreffen vorteilhafte Ausgestaltungen eines molchbaren Produktleitungsabschnittes, an dessen Ende jeweils eine reinigbare Molchstation gemäß der Erfindung angordnet ist.

Da der Molch neben seiner Verschlußläge innerhalb der Sendestation erfindungsgemäß in eine weitere Lage verschoben werden kann, in der er sich in einem gegenüber dem Querschnitt des molchbaren Produktleitungsabschnittes erweiterten Querschnitt des Gehäuses befindet, ist er nunmehr in dieser Lage vom Reinigungsmittel umspülbar, da der erweiterte Querschnitt des Gehäuses, gemäß einer vorteilhaften Ausgestaltung der Sendestation, mit einem Anschluß am Gehäuse in Verbindung steht, über den das Reinigungsmittel abgeleitet werden kann. Mit Hilfe des beweglichen Anschlages wird der Molch zwangsweise in seine Verschlußläge überführt, während er seine Reinigungsstellung von sich aus unter der Einwirkung aes Reinigungsmittels einnehmen kann, sofern der bewegliche Anschlag um den hierfür erforderlichen Verschiebeweg zurückgenommen wird.

Die Verschiebung des Molches im Produktleitungsabschnitt erfordert ausreichend großes Spiel gegenüber der ihn umschließenden Wandung. Dieses Spiel ist auch annähernd in der Verschlußlage des Molches innerhalb der Sendesation vorgesehen, so daß in diesem Fall Produkt oder gegebenenfalls auch Reinigungsmittel in geringem Umfang am Molch vorbei in die Sendesation eindringen kann. Damit nun ein Übertritt dieser Fluide aus der Sendestation in die Umgebung verhindert wird, sieht eine Weiterbildung der Erfindung vor, daß der Anschluß zur Ableitung des Reinigungsmittels durch ein Ventil verschlossen wird. Eine weitere Ausgestaltung sieht vor, daß der Anschlag mit einem Schließglied des Ventils starr verbunden ist, und daß im Zuge der Schließbewegung des Schließgliedes der Molch mittels des Anschlages in seine Verschlußlage verbracht wird. Durch diese Anordnung erübrigt sich ein separater Antrieb des Anschlages, da die Hubbewegung des Schließgliedes gleichermaßen verwendet wird, um die Stellbewegung des beweglichen Anschlages zu realisieren. Ein Schließen des Ventils bewirkt die zwangsweise Überführung des Molches in seine Veschlußlage, während die Öffnungsbewegung des Ventils die Rücknahme des Anschlages bewirkt, so daß der Molch unter dem Einfluß des Reinigungsmittels in seine Reinigungsstellung verschoben wird.

Im erweiterten Querschnitt des Gehäuses der Sendestation sind, gemäß einer weiteren Ausgestaltung der Erfindung, wenigstens drei Führungsrippen für den Molch angeordnet. die ihn längs seiner Verschiebebewegung führen und die ihn in seiner Endlage, der Reinigungsstellung, stützen.

Falls das Ventil, gemaß einer bevorzugten Ausführungsform der Erfindung, den Anschluß zur Ableitung des Reinigungsmittels mit einem Luft- und Reinigungsrohr verbindet, an das jeweils ein erstes Ventil, welches für die Zufuhr von Druckmittel vorgesehen ist, und ein zweites Ventil, welches der Abfuhr überströmenden Druckmittels dient, angeschlossen sind, ergibt sich eine äußerst kompakte Gesamtanordnung.

Zur Sicherstellung eines automatisierbaren Produktausschubes mit Hilfe des Molches einerseits und eines Rücklaufes des Molches von der Empfangsstation zur Sendestation andererseits ist sowohl an der Sendestation als auch an der Empfangsstation jeweils eine Rückmeldeeinrichtung vorgesehen, die die notwenigen Schaltimpulse, beispielsweise über einen im Molch angeordneten Permantmagneten, dessen stationäres Magnetfeld über den ganzen Umfang des Molches außerhalb der Sende- bzw. Empfangsstation erfaßt werden kann, erhält.

Ein besonderes Problem stellt das Überfahren eines im Regelfall in jedem molchbaren Produktleitungsabschnitt vorzusehenden T-Abzweiges durch den Molch dar. Um ein sicheres Uberfahren eines derartigen T-Abzweiges bei gleichzeitiger Lagestabilisierung des Molches zu gewährleisten, muß dieser mindestens zwei tragende, in ausreichendem Abstand voneinander angeordnete, mit der Mantelfläche des Produktleitungsabschnittes korrespodierende Flächen besitzen. Andererseits erfordert aber das Durchlaufen von Rohrbögen eine möglichst kurze und genügend elastische Ausbildung des Molches. Um diesen Zielkonflikt möglichst optimal zu lösen, sieht eine weitere Ausgestaltung der reinigbaren Molchstation vor, daß der Abzweig des T-Abzweiges einen gegenüber dem Nennquerschnitt des T-Abzweiges reduzierten Querschnitt aufweist, der sich anschließend wieder auf Nennquerschnitt erweitert. Darüber hinaus ist vorgesehen, daß die Sendestation unmittelbar über den Durchgangsteil des T-Abzweiges an den Produktleitungsabschnitt angeschlossen ist. Dadurch wird die nicht vom Molchvorgang erfaßte Produktmenge so gering wie möglich gehalten. Beim später noch erläuterten Doppelmolchsystem ist jede Sendestation auch Empfangsstation für den zweiten Molch. Auch wenn, wie in dieser Variante der Erfindung, die Sendestation als Empfangsstation fungiert, wird durch ihre unmittelbare Anordnung am Durchgangsteil des T-Abzweiges sichergestellt, daß so wenig wie möglich Produktverluste auftreten.

Da bei der erfindungsgemäßen Ausbildung der Molchstation der Molch dann CIP-reinigungsfähig ist, wenn er in die Sendestation überführt wurde, ist es nunmehr ohne weiteres möglich, jeden molchbaren Produktleitungsabschnitt, der in einem vollständig automatisierten Reinigungsablauf integriert ist, mit mindestens einer reinigbaren Molchstation gemäß der Erfindung auszustatten. Eine an einem Ende des Produktleitungsabschnittes angeordnete reinigbare Molchstation erlaubt es, letzteren nur in einer Richtung mit Produkt zu befahren. Wird hingegen, wie dies eine weitere vorteilhafte Ausgestaltung des molchbaren Produktleitungsabschnittes vorsieht, an dessen Ende jeweils eine reinigbare Molchstation vorgesehen und wird darüber hinaus jede der beiden Sendestationen mit einer Haltevorrichtung für den Molch ausgestattet, dann ist der molchbare Produktleitungsabschnitt in beiden Richtungen mit Produkt befahrbar. Jede Sendestation ist einerseits Empfangsstation für den eigenen Molch und andererseits auch Empfangsstation für den Molch der anderen Sendestation. Die vorgeschlagene Haltevorrichtung stellt in diesem Zusammenhang sicher, daß der im Molchsender befindliche erste Molch arretiert werden kann, während der zweite Molch, der sich nach dem Produktausschub unterhalb des ersten befindet, mit Druckmittel in seinen eigenen Molchsender zurückgedrückt wird.

Das Doppelmolchsystem erlaubt nicht nur, den Produktausschub wahlweise in beiden Richtungen durchzuführen, es bietet darüber hinaus auch noch weitere Vorteile. So ist der zweite Molch auch beim schonenden Befüllen mit empfindlichen Produkten vorteilhaft einsetzbar. Es können beispielsweise senkrechte Rohrleitungen problemlos mit einer Pfropfenströmung auch abwärts befüllt werden, wenn der Einleitungströmung ein durch ausreichenden Gegendruck gestützter Molch vorherläuft. Das gleiche gilt für stark zum Schäumen neigende Produkte, wie zum Beispiel Shampoo, in senkrechten wie in horizontalen Leitungen. Der vorherlaufende Molch muß im Anschluß an den Befüllvorgang in seine Ausgangsstellung zurückkehren. Dies bedeutet, daß er dabei den molchbaren Produktleitungsabschnitt entgegen der Befüllrichtung ausschiebt. Es handelt sich bei dem vorgeschlagenen Doppelmolchsystem daher um eine Anordnung, die jede Ausschubrichtung frei wählbar erlaubt.

Damit der dem Produkt vorherlaufende Molch in seine erforderliche Ausgangsposition überführt werden kann, sieht eine vorteilhafte Ausgestaltung des molchbaren Produktleitungsabschnittes vor, daß in jenem Teil, der während der Produktfahrt vom Produkt durchströmt ist, zwei weitere Haltevorrichtungen und eine diesen jeweils zugeordnete Rückmeldeeinrichtung angeordnet sind, wobei sich die erste Haltevorrichtung nahe am Anschluß zur vorgeordneten Produktleitung und die zweite Haltevorrichtung nahe am Anschluß zur nachgeordneten Produktleitung befinden. Dabei stellt die Rückmeldeeinrichtung die erforderliche Position des in Frage kommenden Molches fest, und die Haltevorrichtung arretiert ihn dann in dieser Position. Das Erreichen dieser definierten Endlage des Molches wird zweckmäßigerweise erleichtert entweder durch seine intermittierende Beaufschlagung mit Druckmittel oder aber durch kontinuierliche Beaufschlagung mittels frequenzgeregelter, rotierend arbeitender Verdrängerpumpen.

Lange molchbare Produktleitungsabschnitte, die eine oder mehrere in Abständen voneinander angeordnete Abzweigungen aufweisen, werden nicht immer auf voller Länge mit Produkt befahren. So kann es vorkommen, daß sich ein Produktleitungsabschnitt in mehrere parallel angeschlossene Behälter verzweigt und daß beispielsweise der der Einleitungsstelle des Produktes in den Produktleitungsabschnitt am nächsten liegende Behälter befüllt werden soll. In diesem Falle wäre dennoch der gesamte weitere Produktleitungsabschnitt mit Produkt aufzufüllen, was entweder zu erheblichen Produktverlusten führen würde oder was wenigstens weitere Maßnahmen zur Entleerung der Leitung und Sicherstellung des nicht in den zu befüllenden Behälter überführten Produktes erfordern würde. In beiden Fällen wäre eine durch die nachfolgende Reinigung bedingte erhöhte Abwasser- und damit eine zusätzliche Umweltbelastung durch Reinigungsmittel und Produkt gegeben. Dieses Problem kann durch das vorgeschlagene Doppelmolchsystem auf außerordentlich elegante Weise gelöst werden, wenn, wie dies eine weitere Ausgestaltung des molchbaren Produktleitungsabschnittes vorsieht, im Produktleitungsabschnitt, zwischen vorgeordneter und nachgeordneter Produktleitung, wenigstens ein T-Abzweig vorgesehen ist, dessen Abzweig einen gegenüber dem Nennquerschnitt des T-Abzweiges reduzierten Querschnitt aufweist, der sich anschließend wieder auf Nennquerschnitt erweitert, wobei nahe beiderseits des Abzweiges jeweils eine Haltevorrichtung und eine dieser jeweils zugeordnete Rückmeldeeinrichtung angeordnet sind. In Abhängigkeit von der Richtung, in der der molchbare Produktleitungsabschnitt vom Produkt befahren wird, wird einer der beiden Molche des Doppelmochsystems an den Abzweig des T-Abzweiges herangefahren, dort durch die Rückmeldeeinrichtung positioniert und durch die Haltevorrichtung arretiert. Er fungiert als verschiebbares, wahlweise an diskreten Stellen positionier- und arretierbares Trennelement, welches jenen Teil des Produktleitungsabschnittes, der bei der bevorstehenden Produktfahrt nicht beaufschlagt werden soll, vom produktbeaufschlagten abtrennt. Die Anzahl der möglichen Verzweigungsstellen des molchbaren Produktleitungsabschnittes unterliegt im Prinzip keinerlei Beschränkung. Jeder T-Abzweig muß im Bereich seines Abzweiges derart ausgebildet sein, daß er von einem zweistufigen Molch sicher überfahren werden kann.

Ein Ausführungsbeispiel der Erfindung ist in der Zeichnung dargestellt und wird im folgenden näher beschrieben.

Es zeigen
- Figur 1: eine Ansicht einer reinigbaren Molchstation gemäß der Erfindung in Verbindung mit einem Produktleitungsabschnitt, einer Empfangsstation und den zugeordneten Ventilen und Einrichtungen zur Bereitstellung des Druckmittels;
- Figur 2: einen Mittelschnitt durch die Sendesation und ein Luft- und Reinigungsrohr mit den daran angeschlossenen Ventilen gemäß der Anordnung nach Fig. 1;
- Figuren 3 und 3a: eine Ansicht und einen Querschnitt durch die Empfangsstation gemäß der Anordnung nach Figur 1;
- Figur 4: eine Ansicht eines molchbaren Produktleitungsabschnittes, an dessen Ende jeweils eine reinigbare Molchstation angeordnet ist;
- Figur 4a: a eine Teilansicht des molchbaren Produktleitungsabschnittes der Anordnung gemäß Figur 4 im Bereich eines weiteren T-Abzweiges;
- Figur 5: einen vereinfachte Darstellung einen Mittelschnittes durch eine Sendestation und
- Figur 6: eine vereinfachte Darstellung eines Mittelschnittes durch eine Sendestation und einen Teil des angrenzenden Produktleitungsabschnittes einer Doppel molchanordnung gemäß Figur 4 mit einer vereinfacht dargestellten Haltevorrichtung für den Molch.

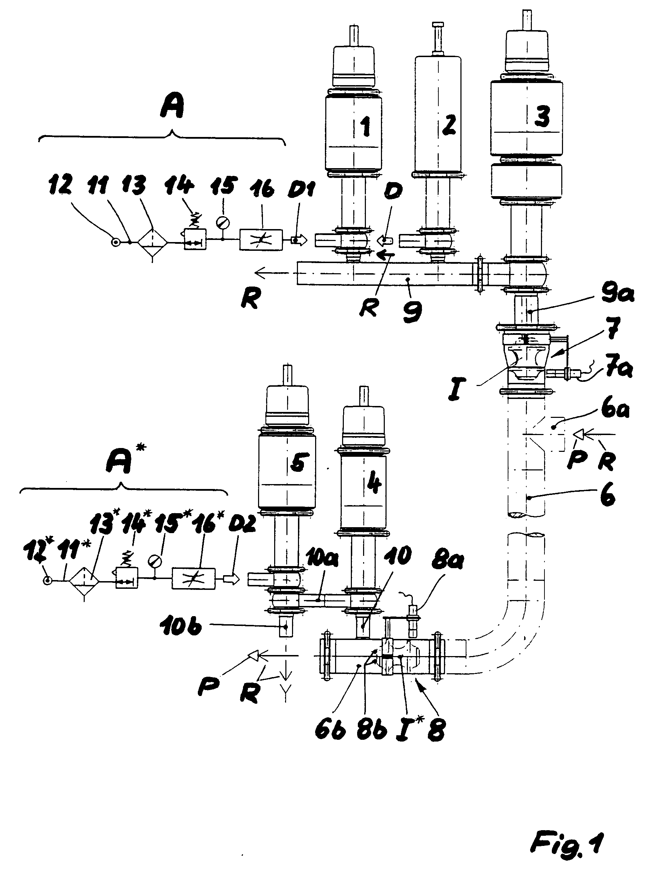

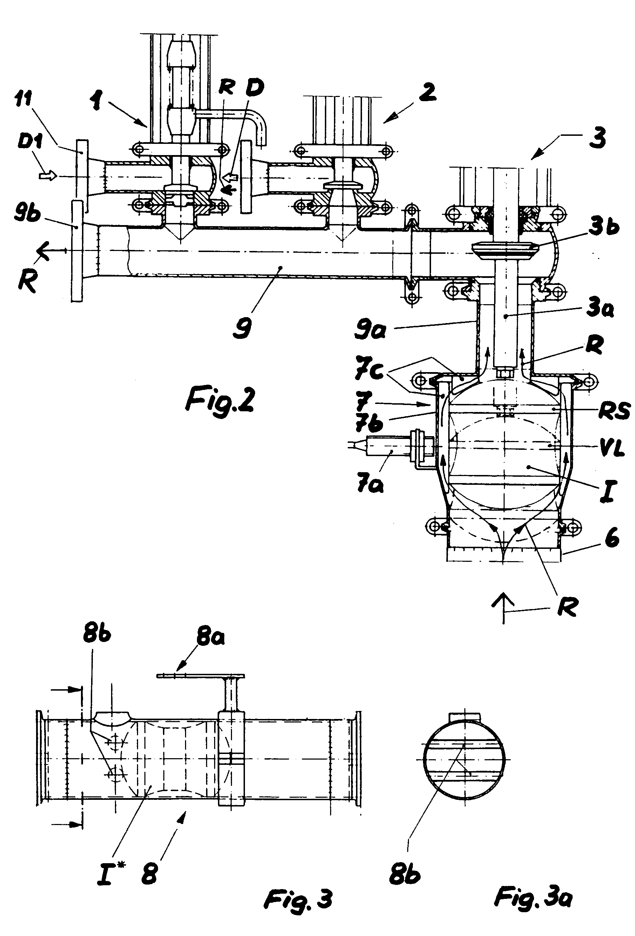

Ein molchbarer Produktleitungsabschnitt 6 (Figur 1) befindet sich zwischen einer vorgeordneten und einer nachgeordneten Produktleitung 6a bzw. 6b, wobei der Eintritt bzw. der Austritt des Produktes jeweils mit P gekennzeichnet ist. Ihm ist eine Sendestation 7 vor- und eine Empfangsstation 8 nachgeordnet. Innerhalb der Sendestation 7 ist ein Molch I strichpunktiert angedeutet, dessen eingenommene Position über eine Rückmeldeeinrichtung 7a erfaßt und gemeldet werden kann. In der Empfangsstation 8 ist die mögliche Endlage des Molches I ebenfalls strichpunktiert angedeutet. Er trägt dort die Bezeichnung I*. Die Endlage des Molches I* in der Empfangsstation 8 ist in den Figuren 3 und 3a deutlicher zu erkennen; sie wird durch zwei Anschläge 8b, die als quer durch den Produktleitungsabschnitt 6 hindurchgreifende Rundbolzen ausgebildet sind, sichergestellt und durch eine Rückmeldeeinrichtung 8a (Fig. 1) erfaßt. In Fließrichtung des Produktes gesehen mündet hinter der Empfangsstation 8 eine erste Verbindungsleitung 10 in die nachgeordnete Produktleitung 6b ein. Ein als Absperrventil ausgebildetes viertes Ventil 4 verbindet die erste Verbindungsleitung 10 mit einer zweiten Verbindungsleitung 10a, die in das untere Gehäuse eines als Wechselventil ausgebildeten fünften Ventils 5 einmündet. Über das obere Gehäuse des fünften Ventils 5 kann Druckmittel D2 zugeführt werden, welches über eine Druckmittelleitung 11* herangeführt wird. Zur Bereitstellung des Druckmittels D2 dient in an sich bekannter Weise eine Druckquelle 12*, ein nachgeordnetes Sieb in Verbindung mit einem Wasserabscheider 13*, ein Druckregelventil 14*, ein Manometer 15* und eine verstellbare Drossel 16*. Das untere Gehäuse des fünften Ventils 5 weist zusätzlich einen nach unten gerichteten Auslauf 10b auf. über den Reinigungsmittel R, welches über die vorgeordnete Produktleitung 6a zugeführt wird, abgeleitet werden kann.

Die Sendestation 7 verfügt über einen Anschluß 9a zur Ableitung des über die vorgeordnete Produktleitung 6a zugeführten Reinigungsmittels R. Ein Ventil 3 (entsprechend der durchnumerierten Reihenfolge handelt es sich um ein drittes Ventil) verbindet den Anschluß 9a mit einem Luft- und Reinigungsrohr 9, an das jeweils ein erstes Ventil 1 und ein zweites Ventil 2 angeschlossen sind. Über das erste Ventil 1 kann Druckmittel D1 in das Luft- und Reinigungsrohr 9 eingeleitet werden. Zur Bereitstellung des Druckmittels D1 dienen Einrichtungen 11* bis 16*, die jenen der vorstehend angegebenen Einrichtungen 11 bis 16 entsprechen oder mit diesen identisch sind. Über das zweite Ventil 2 wird Druck oder Reinigungsmittel D bzw. R aus dem molchbaren Produktleitungsabschnitt 6 abgeführt.

In der Darstellung gemäß Figur 2 sind Aufbau und Funktion des ersten, des zweiten und des dritten Ventils 1 bzw. 2 bzw. 3 und der Sendestation 7 deutlicher erkennbar Das erste Ventil 1 verfügt über zwei nicht näher bezeichnete Schließglieder, zwischen denen sich ein ebenfalls nicht näher bezeichneter Leckagehohlraum befindet. Es handelt sich bei diesem Ventil um ein sogenanntes Doppelsitzventil, welches bei Auftreten einer Leckage an einem der beiden Schließglieder sicherstellt, daß diese Leckage nicht in den Bereich jenseits des anderen Schließgliedes gelangt. Das zweite Ventil 2 ist als Überströmventil ausgebildet. Der nicht dargestellte Antrieb dieses Ventils wird mit Druckmittel so vorgespannt, daß das Ventil erst bei einem bestimmten Überdruck innerhalb des Luft- und Reinigungsrohres 9 öffnet. Eine ebenfalls nicht dargestellte Feder des Ventils 2 ist auf einen erforderlichen Haltedruck eingestellt, der so bemessen ist, daß mit diesem Druck das Produkt mit Hilfe des Molches I aus dem molchbaren Produktleitungsabschnitt 6 ausgeschoben werden kann.

Ein Schließglied 3b des Ventils 3 verschließt den Anschluß 9a an einem Gehäuse 7b der Sendestation 7. An dem Schließglied 3b ist eine Verstellstange 3a angeordnet, die durch den Anschluß 9a bis in das Gehäuse 7b der Sendestation 7 hindurchgreift und einen beweglichen Anschlag für den Molch I darstellt. Man erkennt weiterhin, daß der Molch I innerhalb des Gehäuses 7b zwei Stellungen einnehmen kann, nämlich eine Verschlußlage VL und eine Reinigungsstellung RS. Zwischen diesen beiden Stellungen wird er mittels wenigstens drei Führungsrippen 7c geführt und in der Reinigungsstellung RS derart gestützt, daß eine Verbindung zwischen dem gegenüber dem Querschnitt des molchbaren Produktleitungsabschnittes 6 erweiterten Querschnitt des Gehäuses 7b und dem Anschluß 9a sichergestellt ist. In der Reinigungsstellung RS kann von unten in die Sendestation 7 eintretendes Reinigungsmittel R an dem Molch I vorbeiströmen und über den Anschluß 9a und das Luft- und Reinigungsrohr 9 fortgeführt werden. Letzteres verfügt über einen Anschluß 9b für eine nicht dargestellte Absperreinrichtung.

Die Wirkungsweise der gesamten Anordnung sei nachfolgend kurz erläutert (s. Figuren 1 bis 3a). Dabei ist nach folgenden Betriebsweisen zu unterscheiden: **Produktstellung**. **Produktausschub** mit dem Molch, **Rücklauf** des Molches und **Reinigungsstellung**.

In der **Produktstellung** sind das dritte und vierte Ventil 3 bzw. 4 geschlossen. Der Molch I wird durch die Verstellstange 3a in seiner Verschlußlage VL, seiner Sende- oder Produktstellung, gehalten. Die Einnahme dieser Stellung wird über die Rückmeldeeinrichtung 7a gemeldet. Das Produkt P kann über die vorgeordnete Produktleitung 6a in den molchbaren Produktleitungsabschnitt 6 eintreten und von dort über die nachgeordnete Produktleitung 6b fortgeführt werden.

Soll nunmehr das **Produkt** über den Molch I, der sich in seiner Sendestellung innerhalb der Sendestation 7 befindet, aus dem molchbaren Produktleitungsabschnitt 6 **ausgeschoben** werden, so müssen das Ventil 3 und das erste Ventil 1 öffnen (vgl. Figur 2). Der erforderliche Druck des Druckmittels D1 für den Ausschub des Produktes P ist an dem Druckregelventil 14 in der Druckmittelleitung 11 eingestellt. Der Molch I wird nunmehr unter der Einwirkung des in die Sendestation 7 einströmenden Druckmittels D1 in die Empfangsstation 8 geschoben. Die regelbare Drossel 14 begrenzt die den Molch I während des Ausschubes zeitlich nachströmende Druckmittelmenge. Damit wird eine unzulässige Beschleunigung des Molches I bei abnehmendem Ausschubwiderstand innerhalb des molchbaren Produktleitungsabschnittes 6 verhindert. Das erste Ventil 1 schließt bei Ankunft des Molches I in der Empfangsstation 8 (Rückmeldung durch die Rückmeldeeinrichtung 8a).

Im Vorwege zur **Rückführung** des Molches I aus der Empfangsstation 8 in die Sendestation 7 muß das Luft- und Reinigungsrohr 9 hinter dem Anschluß 9b abgesperrt sein. Das Ventil 3 ist geöffnet, und das zweite Ventil 2 wird angesteuert. Auf die bei diesem Ventil vorliegenden Überstrombedingungen wurde vorstehend bereits hingewiesen. Nunmehr öffnen das vierte und das fünfte Ventil 4 bzw. 5. Der erforderliche Druck des Druckmittels D2 für den Rücklauf des Molches I in die Sendestation 7 ist an dem Druckregelventil 14* in der Druckmittelleitung 11* zum fünften Ventil 5 voreingestellt. Der Molch I wird gegen ein Druckmittelpolster (z.B. 1 bar Überdruck) in die Sendestation 7 zurückgeschoben. Das überschüssige Druckmittel D wird dabei über das vorgespannte Überströmventil 2 abgeblasen. Das fünfte Ventil 5 schließt bei Ankunft des Molches I in der Sendestation 7 (Rückmeldung durch die Rückmeldeeinrichtung 7a). Das vierte Ventil 4 schließt nach Ablauf einer fest eingestellten Zeit, in der sich das Druckmittel D2 innerhalb des molchbaren Produktleitungsabschnittes 6 hinreichend entspannen kann. Nunmehr geht das zweite Ventil 2 in seine Ruhelage zurück, und das Ventil 3 schließt.

Die **Reinigung** der Sende- und Empfangsstation 7 bzw. 8 wird nunmehr in das Rohrreinigungsprogramm des Produktweges 6a, 6 und 6b eingebunden. Dabei befindet sich der Molch I in der Sendestation 7 (Rückmeldung über die Rückmeldeeinrichtung 7a). Die nachgeordnete Produktleitung 6b muß während der Reinigung der Sende- und Empfangsstation 7 bzw. 8 über eine nicht dargestellte Absperreinrichtung abgesperrt sein. Nunmehr schließt das Ventil 3, und das vierte Ventil 4 öffnet. Das Reinigungsmittel R strömt über die vorgeordnete Produktleitung 6a in den Produktleitungsabschnitt 6 ein und gelangt von dort über die Empfangsstation 8 in die nachgeordnete Produktleitung 6b. Von dort wird sie über die erste Verbindungsleitung 10, das vierte Ventil 4 und die zweite Verbindungsleitung 10a dem unteren Gehäuse des fünften Ventils 5 zugeführt und über dessen Auslauf 10b abgeleitet. Das Ventil 4 schließt beispielsweise nach Ablauf einer fest eingestellten Reinigungszeit. Alsdann öffnet das Ventil 3, wodurch der Molch I unter der Wirkung des Reinigungsvorlaufdruckes in seine Reinigungstellung RS gedrückt wird.

Anschließend werden sowohl das Gehäuse 7b der Sendestation 7 als auch der Molch I gereinigt. Das Reinigungsmittel R strömt uber den Anschluß 3a in das Luft- und Reinigungsrohr 9 und wird von dort fortgeführt. Während dieser Reinigungsprozedur wird für einige Sekunden das zweite Ventil 2 angesteuert, wodurch es unter der Wirkung des Reinigungsvorlaufdruckes aufgedrückt und sein Ventilgehäuse mit Reinigungsmittel R durchspült wird. Nach Ablauf einer bestimmten Reinigungszeit schließt das Ventil 3, und die Reinigungsprozedur der gesamten Anordnung ist beendet.

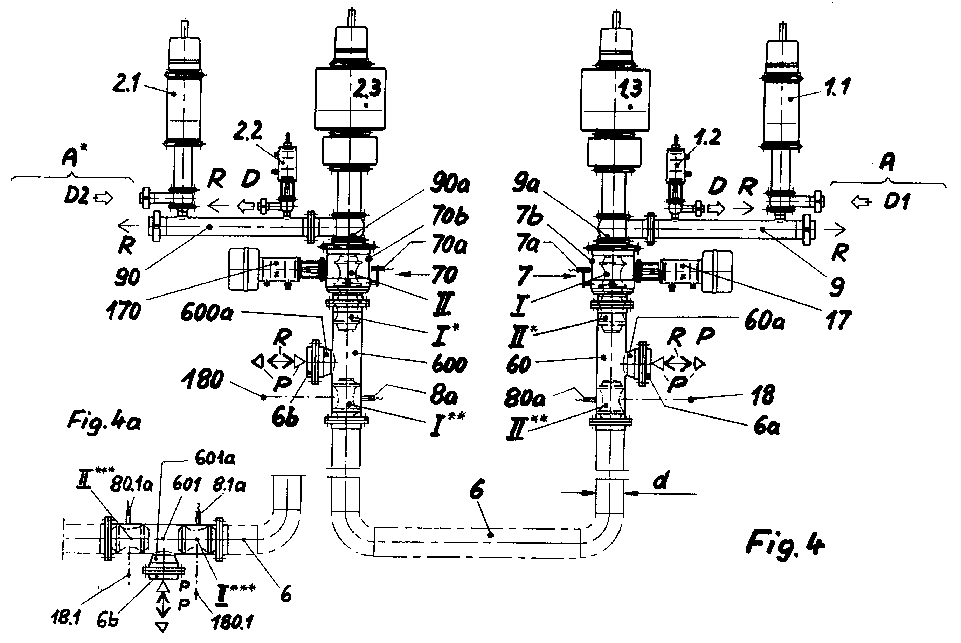

In der Anordnung gemäß Figur 4 ist an jedem Ende des molchbaren Produktleitungsabschnittes 6 jeweils eine reinigbare Molchstation angeordnet. Im rechten Teil der Darstellung erkennt man die erste Sendestation 7 in Verbindung mit allen notwendigen Bauteilen, wie sie nach Aufbau und Wirkungsweise in der Beschreibung zu Figur 1 bereits hinreichend erläutert wurden. Im Hinblick auf die dargestellte Doppelanordnung wurden lediglich das erste, das zweite und das dritte Ventil mit 1.1 bzw. 1.2 bzw. 1.3 bezeichnet. Die mit A gekennzeichnete, nicht näher dargestellte Anordnung im Anschluß an das erste Ventil 1.1 entspricht jener, die bereits in der Anordnung nach den Figuren 1 und 2 beschrieben wurde. Die zweite Molchstation im linken Teil der Anordnung ist völlig identisch zu jener im rechten Teil. Hier tragen das erste, das zweite und das dritte Ventil die Bezeichnungen 2.1 bzw. 2.2 bzw. 2.3, während die anderen, vorstehend im Zusammenhang mit den Figuren 1 und 2 erläuterten Bauteile eine um Faktor 10 erweiterte Bezeichnung erhalten haben. Die mit A* gekennzeichnete, nicht näher dargestellte Anordnung im Anschluß an das erste Ventil 2.1 entspricht der Anordnung A oder ist mit dieser identisch.

In der zweiten Sendestation 70 befindet sich ein zweiter Molch II der, ebenso wie der erste Molch I in der Sendestation 7, in strichpunktierter Darstellung in weiteren moglichen Positionen innerhalb des molchbaren Produktleitungs - abschnitte 6 und der angrenzenden T-Abzweige 60 bzw. 600 dargestellt ist. Mit I* ist die Endlage des Molches I unterhalb des sich in seiner Sendestation 70 befindenden Molches II gekennzeichnet. Mit I** ist eine Startposition des Molches I gekennzeichnet, die er einzunehmen hat, wenn er dem über den T-Abzweig 600 zugeführten Produkt vorhereilen soll. In entsprechender Weise sind die adäquaten Positionen des Molches II (Endlage II* unterhalb des in sich seiner Sendestation 7 befindenden Molches I und Startposition II** des vorherlaufenden Molches II im T-Abzweig 60) bezeichnet.

Ein in Figur 1 dargestelltes viertes und ein fünftes Ventil 4 bzw. 5 sind bei der Doppelmolchanordnung gemäß Figur 4 nicht mehr erforderlich. Das Druckmittel D2 zur Rückführung des Molches I aus seiner Empfangsstation unterhalb des sich in seiner Sendestation 70 befindenden Molches II wird über das erste Ventil 2.1 zugeführt. In entsprechender Weise erfolgt die Rückführung des Molches II aus seiner Endlage II* unterhalb des sich in seiner Sendestation 7 befindenden Molches I über das Druckmittel D1, welches über das erste Ventil 1.1 eingeleitet wird.

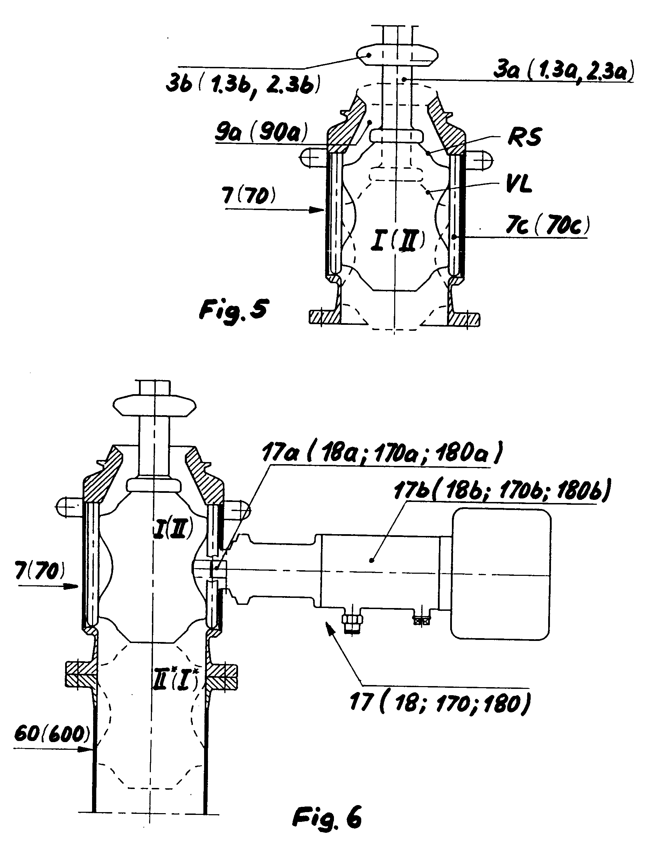

Damit eine Rückführung des Molches I bzw. II aus seiner jeweiligen Endlage I* bzw. II* innerhalb der Empfangsstation unterhalb der Sendestation 70 bzw. 7 möglich ist, muß der sich in der zugeordneten Sendestation befindende Molch II bzw. I arretiert werden. Dies geschieht durch eine Haltevorrichtung 17 bzw. 170, die in die Sendestation 7 bzw. 70 hineingreift. In Figur 6 ist diese Arretierung des Molche I bzw. II im einzelnen verdeutlicht. Die Haltevorrichtung 17 verfügt über einen Haltbolzen 17a , der mit einem federöffnenden Antrieb 17b verbunden ist und in eine nicht naher bezeichnete umlaufende Ausnehmung zwischen den tragenden Flächen des zweistufigen Molches I bzw. II eingreift, wodurch eine formschlüssige Arretierung des Molches I bzw. II innerhalb des Molchsenders 7 bzw. 70 sichergestellt ist. Die Bezeichnungen 18, 170 und 180 stehen für weitere Haltvorrichtungen im Zusammenhang mit der in Figur 4 dargestellten Doppelmolchanordnung, die Bezeichnungen 18a, 170a und 180a stehen für die zugeordneten Haltebolzen und die Bezeichnungen 18b, 170b und 180b bezeichnen die jeweils zugeordneten Antriebe. Unterhalb des Molches I bzw. II ist in gestrichelter Darstellung die Endlage II* bzw. I* des Molches II bzw. I innerhalb des T-Abzweiges 60 bzw. 600 dargestellt. Letzterer stellt sozusagen jeweils die Empfangsstation für den zugeordneten Molch II bzw. I dar. Aus Figur 6 ist in Verbindung mit Figur 4 ersichtlich, daß über den Anschluß 9a bzw. 90a, der in Figur 5 näher bezeichnet ist, Druckmittel D1 bzw. Druckmittel D2 zugeführt werden kann, womit der Molch II bzw. I in seine jeweilige Sendestation 70 bzw. 7 zurückgedrückt werden kann. Der Molch I bzw. II bleibt dabei unverrückbar in seiner in Figur 5 mit RS gekennzeichneten Reinigungsstellung, die es erlaubt, daß das Druckmittel D1 bzw. D2 an ihm vorbeiströmen kann, um den unter ihm angeordneten Molch II bzw. I innerhalb des T-Abzweiges 60 bzw. 600 zu beaufschlagen. In Figur 5 sind weitere Bauteile der in der Doppelmolchanordnung verwendeten Sendestation 7 bzw. 70, wie sie im Zusammenhang mit der Einfachmolchstation im Rahmen der Figur 2 bereits beschrieben wurden, noch einmal dargestellt. Das Schließglied des dritten Ventils 1.3 bzw. 2.3 der Doppelmolchanordnung ist mit 1.3b bzw. 2.3b bezeichnet. Die Verstellstange trägt in diesem Falle die Bezeichnung 1.3a bzw. 2.3a und die Führungsrippen der zweiten Sendestation 70 tragen die Bezeichnung 70c. Weiterhin ist aus den Figuren 5 und 6 erkennbar, daß die Rückführung des Molches II bzw. I aus seiner Endlage unterhalb des sich in der Sendestation 7 bzw. 70 befindenden Molche I bzw. II nur dann möglich ist, wenn sich der in der Sendestation befindende Molch in seiner Reinigungsstellung RS befindet.

Aus Figur 4 ist darüber hinaus ersichtlich, daß der molchbare Produktleitungsabschnitt 6 in beiden Richtungen sowohl mit Produkt P als auch mit Reinigungsmittel R befahren werden kann. Weiterhin zeigt die Darstellung, daß die Sendestation 7 bzw. 70 unmittelbar über den Durchgangsteil eines T-Abzweiges 60 bzw. 600 an den Produktleitungsabschnitt 6 angeschlossen ist, daß der Abzweig des T-Abzweiges 60a bzw. 600a einen gegenüber dem Nennquerschnitt des T-Abzweiges reduzierten Querschnitt aufweist (Nennquerschnitt resultiert aus Nenndurchmesser d), der sich anschließend wieder auf Nennquerschnitt erweitert, daß an den Abzweig 60a die vorgeordnete Produktleitung 6a und an den Abzweig 600a die nachgeordnete Produktleitung 6b angeschlossen ist. Innerhalb des T-Abzweiges 60 bzw. 600 befindet sich jeweils die Startposition des dem Produkt vorauseilenden Molches II** bzw. I**. Sie wird über eine Rückmeldeeinrichtung 80a bzw. 8a erfaßt und über die Haltevorrichtung 18 bzw. 180 arretiert. In diesem Zusammenhang ist erkennbar, daß sich die Haltevorrichtung 18 nahe am Anschluß zur vorgeordneten Produktleitung 6a und die Haltevorrichtung 180 nahe am Anschluß zur nachgeordneten Produktleitung 6a befinden.

Figur 4a zeigt eine durch einen T-Abzweig 601 realisierte Verzweigung des molchbaren Produktleitungsabschnittes 6. Dieser T-Abzweig 601 ist in gleicher Weise ausgebildet wie die vorgenannten T-Abzweige 60 bzw. 600, das heißt sein Abzweig 601a ist durch einen zweistufig ausgebildeten Molch sicher überfahrbar. In Anlehnung an die vorgenannte Nomenklatur ergibt sich nun für den Molch I bzw. II eine dritte Position, nämlich die Position I*** bzw. die Position II***. wobei sich erstere rechts vom Abzweig 601a und letztere links von ihm befinden. Die Positionen der Molche werden jeweils durch eine Rückmeldeeinrichtung 8.1a bzw. 80.1a erfaßt und über eine Haltevorrichtung 180.1 bzw. 18.1 formschlüssig arretiert. Um Produktverluste möglichst zu minimieren befinden sich die vorgenannten möglichen Molchpositionen so nahe wie möglich am Abzweig 601a.

Die mit dieser Variante der Doppelmolchanordnung erzielbaren Vorteile wurden einleitend bereits erwähnt. Auf eine detaillierte Erläuterung der Wirkungsweise der Doppelmolchanordnung gemäß Figur 4 kann verzichtet werden, da die einzelnen Teilfunktionen der Anordnung im Zusammenhang mit der Erläuterung der Einfachmolchanordnung bereits ausführlich dargestellt wurden und sich der Gesamtzusammenhang unter Berücksichtigung der einleitenden Ausführungen zum Doppelmolchsystem sinngemäß aus der Einfachmolchanordnung herleiten läßt.

## Patentansprüche

1. Reinigbare Molchstation, die als Sende- bzw. Empfangsstation (7;70) ausgebildet ist und in der ein Molch (I;II) einen molchbaren Produktleitungsabschnitt (6) einseitig begrenzt, an die eine Druckmittelquelle (12;12*) zur gesteuerten überführung des Molches von der Sende- (7;70) zur Empfangsstation (8;7) angeschlossen ist, aus der im Zuge der Rückführung des Molches von der Empfangs- (8;7) zur Sendestation (7;70) das aus dem Produktleitungsabschnitt verdrängte Druckmittel (D) abgeführt wird, mit Kontrolleinrichtungen (7a;70a bzw. 8a;80a) zum Feststellen der Position des Molches, mit gegenüber dem molchbaren Abschnitt erweitertem Querschnitt (7b;70b) und mit einem beweglichen Anschlag (3a; 1.3a,2.3a), der mit einem Schließglied (3b; 1.2b, 2.3b) eines Ventils (3; 1.3,2.3) starr verbunden ist, für den Molch, wobei der Molch (I;II) in seine die Ableitung des Reinigungsmittels (R) ermöglichende Reinigungsstellung (RS) im Bereich des erweiterten Querschnitts (7b;70b) rückführbar ist und mittels des beweglichen Anschlages (3a; 1.3a,2.3a) in eine den molchbaren Produktleitungsabschnitt (6) begrenzende Verschlußlage (VL), die seine Sende- und Produktstellung darstellt, verschiebbar ist, und wobei das Ventil (3; 1.3,2.3) einen mit dem erweiterten Querschnitt (7b; 7b, 70) in Verbindung stehenden Anschluß (9a; 9a,90a) mit einem Luft- und Reinigungsrohr (9; 9,90) verbindet.

2. Reinigbare Molchstation nach Anspruch 1, dadurch gekennzeichnet, daß im erweiterten Querschnitt des Gehäuses (7b;70b) wenigstens drei Führungsrippen (7c, 70c) für den Molch (I;II) vorgesehen sind.

3. Reinigbare Molchsstation nach Anspruch 1 oder 2, dadurch gekennzeichnet, daß an das Reinigungsrohr (9; 9,90) jeweils ein erstes Ventil (1; 1.1,2.1), welches für die Zufuhr von Druckmittel (D1; D1,D2) vorgesehen ist, und ein zweites Ventil (2; 1.2,2.2), welches der Abfuhr überströmenden Druckmittels (D) dient, angeschlossen sind.

4. Reinigbare Molchstation nach einem der Ansprüche 1 bis 3, dadurch gekennzeichnet, daß die Sendestation (7;70) und die Empfangsstation (8) eine Rückmeldeeinrichtung (7a; 70a bzw. 8a) aufweisen.

5. Reinigbare Molchstation nach einem der Ansprüche 1 bis 4, dadurch gekennzeichnet, daß die Sendestation (7;70) unmittelbar über den Durchgangsteil eines T-Abzweiges (60;600) an den Produktleitungsabschnitt (6) angeschlossen ist, daß der Abzweig des T-Abzweiges (60a 600a) einen gegenüber dem Nennquerschnitt des T-Abzweiges reduzierten Querschnitt aufweist, der sich anschließend auf Nennquerschnitt erweitert, und daß an den Abzweig (60a; 600a) die Produktleitung angeschlossen ist.

6. Molchbarer Produktleitungsabschnitt, gekennzeichnet durch mindestens eine reinigbare Molchstation nach einem der Ansprüche 1 bis 5.

7. Molchbarer Produktleitungsabschnitt, an dessen Ende jeweils eine reinigbare Molchstation nach einem der Ansprüche 1 bis 6 angeordnet ist, **dadurch gekennzeichnet,** daß die Sendestation (7) eine Haltevorrichtung (17) und die Sendestation (70) eine Haltevorrichtung (170) für den Molch (I bzw. II) aufweisen.

8. Molchbarer Produktleitungsabschnitt nach Anspruch 7, **dadurch gekennzeichnet,** daß im Produktleitungsabschnitt (6), der während der Produktfahrt vom Produkt durchströmt ist, zwei weitere Haltevorrichtungen (18 und 180) und eine diesen jeweils zugeordnete Rückmeldeeinrichtung (80a bzw. 8a) angeordnet sind, wobei sich die Haltevorrichtung (18) nahe am Anschluß zur vorgeordneten Produktleitung (6a) und die Haltevorrichtung (180) nahe am Anschluß zur nachgeordneten Produktleitung (6b) befinden.

9. Molchbarer Produktleitungsabschnitt nach Anspruch 7 oder 8, **dadurch gekennzeichnet**, daß im Produktleitungsabschnitt (6), zwischen vorgeordneter und nachgeordneter Produktleitung (6a bzw. 6b), wenigsten ein T-Abzweig (601) vorgesehen ist, dessen Abzweig (601a) nach Anspruch 6 ausgebildet ist, wobei nahe beiderseits des Abzweiges (601a) jeweils eine Haltevorrichtung (18.1 bzw. 180.1) und eine dieser jeweils zugeordnete Rückmeldeeinrichtung (80.1a bzw. 8.1a) angeordnet sind.

## Claims

1. Cleanable scraper station which takes the form of a sending and receiving station (7;70) and in which a scraper (I;II) limits on one side a scrapable product line section (6), to which is connected a pressure medium source (12;12*) for the controlled transfer of the scraper from the sending (7;70) to the receiving station (8;7) from which during the return of the scraper from the receiving (8;7) to the sending station (7;70) the pressure medium source (D) forced from the product line section is discharged, with monitoring devices (7a;70a and 8a;80a) to determine the position of the scraper, with a wider cross-section (7b;70b) than the scrapable section and with a movable stop (3a; 1.3a,2.3a) for the scraper being rigidly connected to a closing member (3b; 1.2b,2.3b) of a valve (3; 1.3,2.3), with the scraper (I,II) being returnable into its cleaning position (RS), allowing draining of the detergent (R), in the area of the wider cross-section (7b;70b) and movable by means of the movable stop (3a; 1.3a,2.3a) into a closure position (VL) limiting the scrapable product line section (6), which represents its sending and product position, and with the valve (3; 1.3,2.3) connecting a joint (9a; 9a,90a) in connection with the wider cross-section (7b; 7b,70) with an air and cleaning pipe (9; 9,90).

2. Cleanable scraper station according to Claim 1, characterized in that in the wider cross-section of the housing (7b;70b) at least three guide ribs (7c, 70c) for the scraper (I;II) are foreseen.

3. Cleanable scraper station according to Claim 1 or 2, characterized in that at the cleaning pipe (9; 9,90) a first valve (1; 1.1,2.1), foreseen for the supply of pressure medium (D1; D1,D2), and a second valve (2; 1.2,2.2) serving for the outlet of overflowing pressure medium (D) are connected.

4. Cleanable scraper station according to one of Claims 1 to 3, characterized in that the sending (7;70) and the receiving station (8) have a reply device (7a; 70 and 8a).

5. Cleanable scraper station according to one of Claims 1 to 4, characterized in that the sending station (7;70) is connected to the product line section (6) immediately above the passage of a T-branch (60;600), that the branch of the T-branch (60a;600a) has a smaller cross-section compared with the nominal cross-section of the T-branch, extending afterwards to the nominal cross-section, and that the product line is connected to the branch (60a; 600a).

6. Scrapable product line section, characterized by at least one cleanable scraper station according to one of the Claims 1 to 5.

7. Scrapable product line section, at its end being positioned a cleanable scraper station according to one of Claims 1 to 6, characterized in that the sending station (7) has a holding device (17) and the sending station (70) has a holding device (170) for the scraper (I and II respectively).

8. Scrapable product line section according to Claim 7, characterized in that in the product line section (6), being passed by the product during production, are positioned two more holding devices (18 and 180) and a reply device (80a and 8a respectively) assigned to each of them, with the holding device (18) being positioned near the preceding joint to the product line (6a) and the holding line (180) being positioned near the following joint to the product line (6b).

9. Scrapable product line section according to Claim 7 or 8, characterized in that in the product line section (6) between the preceding and the following production line (6a and 6b), at least one T-branch (601) is foreseen, its branch (601a) taking the form according to Claim 6, with holding devices (18.1 and 180.1 respectively) near each side of the branch (601a) and reply devices (80.1a and 8.1a) assigned to each of them being positioned.

## Revendications

1. Station de raclage nettoyable, qui est réalisée sous forme de station d'envoi ou de réception (7; 70), dans laquelle un écouvillon (I; II) limite d'un côté une partie raclable (6) de conduite de produit, station à laquelle est raccordée une source de milieu sous pression (12; 12*) pour transférer de façon controlée l'écouvillon depuis la station d'envoi (7; 70) jusqu'à la station de réception (8; 7), station hors de laquelle le milieu sous pression (D) déplacé au cours du renvoi de l'écouvillon depuis la station de réception (8,; 7) jusqu'à la station d'envoi (7; 70) est extrait de la partie de conduite, la station comprenant des dispositifs de contrôle (7a; 70a ou 8a; 80a) pour fixer la position de l'écouvillon, présentant une section transversale (7b; 70b) élargie par rapport à la partie raclable
et comportant, pour l'écouvillon, une butée mobile (3a; 1.3a, 3.3a) qui est reliée de façon rigide à un organe de fermeture (3b; 1.2b, 2.3b) d'une vanne (3; 1.3, 2.3), l'écouvillon (I; II) pouvant être renvoyé vers sa position de nettoyage (RS) située dans la zone de section transversale élargie (7b; 70b) qui permet le départ du moyen de nettoyage (R), et pouvant être déplacé, au moyen de la butée mobile (3a; 1.3a, 2.3a) jusque dans une position de fermeture (VL) qui limite la partie raclable (6) de conduite et qui représente sa position d'envoi et de produit,
et la vanne (3; 1.3, 2.3) reliant à une tubulure de mise à l'atmosphère et de nettoyage (9; 9, 90) un raccord (9a; 9a, 90a) qui est en liaison avec la section transversale élargie (7B; 7b, 70).

2. Station de raclage nettoyable selon la revendication 1, caractérisée en ce qu'au moins trois nervures de guidage (7c, 70c) pour l'écouvillon (I; II) sont prévues dans la section transversale élargie du boîtier (7b; 70b).

3. Station de raclage nettoyable selon la revendication 1 ou 2, caractérisée en ce que respectivement une première vanne (1; 1.1, 2.1), qui est prévue pour l'amenée de milieu sous pression (D1; D1,D2), et une deuxième vanne (2; 1.2,2.2), qui sert à l'évacuation du milieu de pression en excès (D), sont raccordées à la tubulure de nettoyage (9; 9,90).

4. Station de raclage nettoyable selon les revendications 1 à 3 caractérisée, en ce que la station d'envoi (7; 70) et la station de réception (8) présentent un dispositif de rappel (7a; 70a ou 8a).

5. Installation de raclage nettoyable selon les revendications 1 à 4, caractérisée en ce que la station d'envoi (7; 70) est immédiatement raccordée par la partie de passage direct d'un raccord en T (60;600) à la partie (6) de conduite de produit, en ce que la partie de dérivation du raccord en T (60a; 600a) présente une section transversale réduite par rapport à la section transversale nominale du raccord en T, et s'élargit ensuite à la section transversale nominale, et en ce que la conduite de produit est raccordée à la partie de dérivation (60a; 600a).

6. Partie de conduite de produit nettoyable, caractérisée par au moins une station de raclage nettoyable selon l'une des revendication 1 à 5.

7. Partie de conduite de produit nettoyable à chaque extrémité de laquelle est disposée une station de raclage nettoyable selon l'une des revendications 1 à 6, caractérisée en ce que la station d'envoi (7) comprend un dispositif de maintien (17) et la station d'envoi (70) contient un dispositif de maintien (170) pour l'écouvillon (I ou II).

8. Partie de conduite de produit raclable selon la revendication 7, caractérisée en ce que deux autres dispositifs de maintien (18 et 180) et un dispositif de renvoi associé à chacun de ceux-ci (80a ou 8a) sont disposés dans la partie de conduite (8) qui est parcourue par le produit pendant l'écoulement de celui-ci, le dispositif de maintien (18) se trouvant près du raccord à la conduite disposé en amont (6a) et le dispositif de maintien (180) près du raccord à la conduite de produit disposé en aval (6b).

9. Partie de conduite de produit raclable selon la revendication 7 ou la revendication 8, caractérisée en ce que au moins un raccord en T (601) dont la partie de dérivation (601a) est réalisée selon la revendication 6 est prévu dans la partie de conduite (6) entre les conduites de produit disposées en amont et en aval (6a et 6b), un dispositif de maintien (18.1 ou 180.1) et un dispositif de rappel associé à chacune d'eux (80.1a ou 8.1a) étant disposés près de chaque côté de la partie de dérivation (601a).
